Europäisches Patentamt

(19) European Patent Office

Office européen des brevets

(11) **EP 0 635 358 B1**

(12) **EUROPEAN PATENT SPECIFICATION**

(45) Date of publication and mention
of the grant of the patent:
**01.12.1999 Bulletin 1999/48**

(51) Int. Cl.$^6$: **B32B 7/06**, B32B 27/36,
C08J 5/18

(21) Application number: **94305251.4**

(22) Date of filing: **18.07.1994**

(54) **Laminate having improved polarization characteristics, and release film used therefor**

Laminat mit verbesserten Polarisationseigenschaften und Trennfolie hierfür

Stratifié ayant des caractéristiques de polarisation améliorées et film détachable utilisé à cet effet

(84) Designated Contracting States:
**DE FR GB**

(30) Priority: **19.07.1993 JP 17809293**
**13.08.1993 JP 20146293**

(43) Date of publication of application:
**25.01.1995 Bulletin 1995/04**

(73) Proprietor: **TEIJIN LIMITED**
**Osaka-shi Osaka 541-0054 (JP)**

(72) Inventors:
  • **Abe, Reizo**
    **Tokyo (JP)**
  • **Tanaka, Kazunori**
    **Anpachi-gun, Gifu-ken (JP)**

(74) Representative:
   **Votier, Sidney David et al**
   **CARPMAELS & RANSFORD**
   **43, Bloomsbury Square**
   **London WC1A 2RA (GB)**

(56) References cited:
  • **PATENT ABSTRACTS OF JAPAN vol. 010, no.
    348 (P-519)22 November 1986 & JP-A-61 148 403
    (TORAY IND INC) 7 July 1986**
  • **PATENT ABSTRACTS OF JAPAN vol. 010, no.
    149 (P-461)30 May 1986 & JP-A-61 003 338
    (TORAY KK) 9 January 1986**
  • **DATABASE WPI Week 9321, Derwent
    Publications Ltd., London, GB; AN 93-173156
    (21) & JP-A-5 107 149 (NITTO DENKO CORP.) 27
    April 1993**
  • **DATABASE WPI Week 9209, Derwent
    Publications Ltd., London, GB; AN 92-068198
    (09) & JP-A-4 011 203 (TORAY IND INC) 16
    January 1992**
  • **PATENT ABSTRACTS OF JAPAN vol. 011, no.
    015 (P-536)16 January 1987 & JP-A-61 189 506
    (NITTO ELECTRIC IND CO LTD) 23 August 1986**
  • **DATABASE WPI Week 9407, Derwent
    Publications Ltd., London, GB; AN 94-051234
    (07) & JP-A-6 003 664 (TOYOBO KK) 14 January
    1994**

Remarks:
The file contains technical information submitted
after the application was filed and not included in
this specification

## Description

Field of the Invention

This invention relates to a laminate having improved polarization characteristics, and a release film which can be used therefor. More specifically, the invention relates to a laminate having a structure which can be obtained when an adhesive layer is formed on one surface of a polarizing film, a retarded polarizing film or a retardation film and a release film is laminated on the surface of the adhesive layer, the laminate having excellent polarization characteristics and making it easy to visually inspect foreign matters; and to a release film which can be used therefor.

Prior Art

In recent years, there has been advanced a technology for a liquid crystal display (LCD) having high performance and high image quality and being colored and large-sized. Moreover, LCD can be lighter in weight and lower in energy consumption than a cathode ray tube (CRT). Accordingly, LCD has been widely employed as a display for note-type personal computers and word processors, and the use of LCD has rapidly spread and grown remarkably.

For further growth in the use of the liquid crystal display (LCD), however, a rationalization of cost is an important factor. Especially with a thin film transistor (TFT, active matrix) system or a super twist nematic (STN) system of a large size, the occurrence of unacceptable products is great, and therefore a reduction in cost by improving the yield is urgently demanded.

In the liquid crystal display (LCD), a polarizing film, a retarded polarizing film and a retardation film are necessary and important parts for providing the density of a transmitted light and changing the color shade of the transmitted light in LDC. For these films, stable maintenance of qualities is also important, and criteria for inspections in the production process, quality and shipment of products have been increasingly more severe.

The polarizing film, the retarded polarizing film and the retardation film are each provided for LCD by die-cutting to desired sizes a roll of a laminate that is prepared by forming an adhesive layer on one surface of a polarizing substrate and then laminating a release film on the adhesive layer. One of the important items in inspection of these films is an inspection of the incorporation and adhesion of foreign matters. The control of foreign matters is important in all steps including not only the step of producing a polarizing film but also the steps of adhesion-laminating with a release film, die-cutting, aging, shipment and packaging.

However, inspection of foreign matters in the final inspection step is a visual inspection by an operator according to a crossed Nicol's method (which coincides with a method in which stretch axes of two polarizing films are crossed at right angles, a release film is placed therebetween and foreign matters are observed with a transmitted light). Especially, in large-sized LCD, exact visual inspection is hindered at times because of the optical anisotropy of the biaxially oriented aromatic polyester film which is the base film of the release film. Therefore, incorporation of foreign matters is very often overlooked.

Problems the Invention Seeks to Solve

There has been used a biaxially oriented aromatic polyester film, especially a biaxially oriented polyethylene terephthalate film, as the base film of a release film which has a good balance of mechanical and thermal characteristics in the longitudinal and transverse directions at the time of film-forming. And the direction of the crystal orientation main axis of the film does not coincide with either the longitudinal or transverse direction of the film, and is nearly in the middle between both directions. Further, the direction of the crystal orientation main axis of the film greatly changes depending on the position of the film transverse (width) direction. This change occurs by a bowing phenomenon, and becomes greater toward both ends than at the center.

On the other hand, the polarizing film, the retarded polarizing film and the retardation film are formed using a monoaxially oriented polarizing film, and the direction of the orientation axis is generally the longitudinal direction.

When the long polarizing film or retardation film is laminated with the rolled release film, the directions of the orientation axes of both the films are deviated, and the crystal orientation main axis of the width direction of the release film gradually changes in a range extending from the center to the width direction. Especially the deviation is greater toward both ends. For this reason, in the visual inspection of foreign matters by a crossed Nicol's method on the obtained laminate, a color of a coherent light occurs, and the degree of this occurrence is stronger toward both ends.

When the width of the laminate is narrow, in other words when the LCD is small-sized, the visual inspection of foreign matters can accurately be conducted to some extent even if the color of the coherent light is somewhat present. However, when the width of the laminate is great, in other words when the LCD is large-sized, it is quite difficult to check all foreign matters by visual inspection.

An object of this invention is to provide a release film which, when laminated with a polarizing film, a retarded polarizing film or a retardation film, does not substantially permit occurrence of a color of the coherent light, makes easy the visual inspection of foreign matters by a crossed Nicol's method, and prevents the overlooking of foreign matters as much as possible especially in large-sized LCD, whereby accuracy of the visual inspection of foreign matters is increased to prevent occurrence of unacceptable products, as well as to provide a laminate having improved polarization characteristics which is obtained by laminating the release film with the polarizing film, the retarded polarizing film or the retardation film.

Means for Solving the Problems

According to the present inventors' studies, it has been found that the object of this invention is accomplished by a laminate having improved polarization characteristics, in which an adhesive layer is formed on one surface of a polarizing film, a retarded polarizing film or a retardation film and a release film having a transparent biaxially oriented aromatic polyester film as base film has its release surface in contact with the adhesive layer, wherein the positioning of the polyester film with respect to the polarizing film, the retarded polarizing film or the retardation film is such that the orientation main axis (as measured by a microwave transmission-type molecular orientation meter) of the polyester film is essentially parallel or substantially perpendicular to the orientation axis of the polarizing film, the retarded polarizing film or the retardation film, and wherein the biaxially oriented aromatic polyester film has an MOR value (the ratio of the maximum value to the minimum value of transmission, both measured with a molecular orientation meter respectively in the longitudinal and in the transverse directions of stretching) of 1.3 to 1.8, and a retardation (R) value, as defined by the following formula (1), of at least 1,200 nm.

$$R = \Delta n.d \tag{1}$$

wherein $\Delta n$ is the difference (nx - ny) between the refractive index (nx) in the width direction and the refractive index (ny) in a direction at right angles to the width direction of the film in a visible light having a wavelength ($\lambda$) of 589 nm, and d is the thickness (nm) of the film.

According to this invention, there is further provided a release film for inspection of a polarizing film, a retarded polarizing film or a retardation film, wherein releasability is imparted to at least one surface of the transparent biaxially oriented aromatic polyester film by silicone coating, said biaxially oriented aromatic polyester film having an MOR value, as measured by a microwave transmission-type molecular orientation meter, of 1.3 to 1.8.

Hereinafter, first the release film used in the laminate in this invention and then the laminate having improved polarization characteristics will be explained in more detail.

Typical examples of the biaxially oriented aromatic polyester film used as the base film of the release film in this invention include a polyethylene terephthalate film and a poly-2,6-naphthalenedicarboxylate film. Of these, the polyethylene terephthalate film is more practical.

The transparent biaxially oriented aromatic polyester film used as the base film of the release film in this invention has an MOR (maximum orientation ratio) value, as measured by a microwave transmission-type molecular orientation meter, of 1.3 to 1.8, preferably 1.35 to 1.75. Regarding the MOR value, it is required that the MOR values measured at three points in the width direction of the film all satisfy the above range. The measuring points are three points, i.e., a central point and points 1/5 from each end between the central point and both ends of the film in the width direction of the film (the direction at right angles with the direction of the orientation main axis measured by the microwave transmission-type molecular orientation meter). That is, the MOR values are measured at three points which are distant by 10 %, 50 % and 90 % from one end in a straight line in the width direction of the film.

In the width direction of the film, the MOR values are measured at the above three points. On the other hand, in the length direction (the direction at right angles to the width direction) of the film, the MOR values are measured at intervals of 1.0 to 5 times, preferably 2 to 3 times the width of the film, for example.

The MOR value here referred to is the ratio of the maximum value to the minimum value (maximum value/minimum value) of a transmitted microwave intensity measured by the transmission-type molecular orientation meter. A film having a smaller difference between the stretch ratios in the longitudinal and transverse directions, i.e., a film having a better balance shows a lower MOR value. Whereas, a film having a larger difference between said stretch ratios, i.e., a film having a higher stretch ratio in one direction, shows a higher MOR value. An MOR value which is lower or higher than the above range is undesirable.

The MOR (maximum orientation ratio) value tends to change in the width direction of the film. The difference of the MOR values at the above three points (difference between the maximum and minimum values) is preferably 0.2 or less, especially preferably 0.15 or less.

As described above, in the base film of the release film in this invention, the range of the MOR value and the range of the difference between the maximum and minimum values satisfy the above conditions, and further the retardation (R) value defined by the following formula (1) is at least 1,200 nm.

$$R = \Delta n \cdot d \qquad (1)$$

wherein $\Delta n$ is the difference $(nx - ny)$ between the refractive index $(nx)$ in the width direction of the film and the refractive index $(ny)$ in a direction at right angles to the width direction of the film in a visible light having a wavelength $(\lambda)$ of 589 nm, and d is the thickness (nm) of the film.

The biaxially oriented aromatic polyester film is a birefringent substance. When light enters, the incident light spreads as two linear polarized lights whose vibrated surfaces intersect at right angles. The difference in optical pathway distance of the two linear polarized lights (normal light and abnormal light) is called retardation (R). This retardation affects the inspection of a polarizing film as a coherent color.

According to a pattern of a coherent color modified by Michel-Levy in crossed Nicols (prepared by a polarization microscope), a coherent light is within a dark sight (black) in a low retardation region. In proportion to the retardation, the coherent light changes color: yellow → red → purple → blue → green. Then, the color returns to yellow, and this color change is repeated in the same cycle. However, according to the studies in this invention, it has been found that when retardation (R) exceeds 1,200 nm, the density of the coherent color sharply decreases, and hence that when retardation (R) is high enough, the coherent color is too dim to prevent the visual inspection. Consequently, it has been found that the range of the optical retardation (R) value is preferably 1,200 nm or more, and in the case of a biaxially oriented aromatic polyester film having usually a thickness of 25 to 50 μm, the most preferred range of the R value is 1,300 nm or more.

To prove this requirement, the ratio of the amount of transmitted light (I) and the amount of incident light ($I_o$) ($I/I_o$) under crossed Nicols of a transparent film having birefringence is generally expressed by the following formula.

$$(I/I_o) = Sin^2(2\theta) \cdot Sin^2 (\pi \cdot \Delta n \cdot d/\lambda) \qquad (2)$$

In crossed Nicols of a transparent film having birefringence, the ratio of the amount of transmitted light and the amount of incident light is closer to the extinction level when the angle of birefringent substance present between the crossed Nicols ($\theta$: corresponding to the orientation angle in this invention) is smaller.

The conditions for the above ratio to be closer to the extinction level are the following two, (a) and (b).

(a) $\theta$ is small.
(b) $\Delta n \cdot d/\lambda = R/\lambda$ is a natural number 1, 2, 3, ... (R is integral times as large as a light source wavelength:$\lambda$)

As the orientation angle $\theta$ is closer to 0, the ratio in the formula (2) is closer to 0, or closer to the extinction level. Thus, foreign matters float white, whereby the efficiency of visual inspection is extremely increased. At the same time, retardation R is preferably about double 590 nm which is the average of 420 nm and 760 nm of the wavelength range of visible light. When (R) is 1,200 nm, the ratio is much closer to the extinction level under the transverse orientation condition with the small orientation angle $\theta$. When retardation (R) is more than 1,200 nm, the density of the coherent light is sharply decrease in the pattern of the coherent light in the crossed Nicols. Accordingly, R ≥ 1,200 nm is an important condition in the visual inspection of foreign matters.

The upper limit of retardation (R) varies with the thickness of the film. With a thickness of 25 to 50 μm, it is unnecessary to set a particular upper limit.

The biaxially oriented aromatic polyester film used as the base film preferably has the following characteristics besides the aforesaid characteristics.

(1) Transparency suited for visual inspection of appearance. Flatness for making the adhesive surface uniform.
(2) Heat resistance, high strength, high elongation and high modulus of elasticity that permit it to withstand coating of an adhesive and lamination with a polarizing film which are conducted under heat with high tension; specifically, the following elongation at break, modulus of elasticity and heat shrinkage.

Elongation at break of the film:

Length direction - 150 to 250 %
Width direction - 50 - 150 %

Modulus of elasticity of the film:

Length direction - 300 to 700 kg/mm$^2$
Width direction - 400 to 800 kg/mm$^2$

Heat shrinkage of the film:

Length direction - 0.4 % or less
Width direction - 0.3 % or less (110°C x 30 min.)

(3) Dimensional stability that does not allow the occurrence of tunneling (delamination phenomenon) or curling which is caused by deviation with the interface of the adhesive due to heat shrinkage of the release film.
(4) Cleaning level which is applicable to its optical usage (absence of harmful foreign matters, adhering dusts, etc.), i.e., 0 to 100 foreign matters per 64.5 cm$^2$ (10 square inches)
(5) Thickness of 25 to 50 μm.

The biaxially oriented aromatic polyester film can be produced by the following method with the following stretching ratios. That is, said film is stretched at least three times in both the longitudinal and transverse directions; the stretch ratio in the longitudinal direction is preferably at least 0.5, more preferably at least 0.7, higher than that in the transverse direction, or the stretch ratio in the transverse direction is preferably at least 0.5, more preferably at least 0.7, higher than that in the longitudinal direction.
It is preferable that the stretch ratios in the longitudinal and transverse directions of the film do not exceed 6.
The biaxial stretching may be carried out by simultaneous biaxial stretching or consecutive biaxial stretching. The latter is preferable. It is advisable that in the thermosetting treatment after the biaxial stretching, treatment of imparting isotropy is conducted to decrease bowing on the whole width of the film. In the biaxially stretched, thermoset film, the heat shrinkage given when the film is maintained at 150°C for 30 minutes (under no load) is preferably 4 % or less in both the longitudinal and transverse directions.
The treatment of imparting releasability to at least one surface of the biaxially oriented aromatic polyester film is not limited in particular. However, silicone coating treatment is preferable. Especially, treatment of forming a curable silicone resin coating is preferable.
The curable silicone resin coating can be formed by coating a coating solution containing a curable silicone resin on at least one surface of the film, drying the coated film and curing it.
The curable silicone resin includes resins prepared by any reaction such as a condensation reaction or an addition reaction and by curing with the radiation of an ultraviolet or electron beam. They may be used either singly or in combination.
The various silicone curing methods are schematically shown below.

Condensation reaction

$$\sim Si\text{-}OH + HO\text{-}Si\text{-} \rightarrow \sim Si\text{-}O\text{-}Si\text{-} + H_2O$$

$$\sim Si\text{-}OH + H\text{-}Si\text{-} \rightarrow \sim Si\text{-}O\text{-}Si\text{-} + H_2$$

$$\sim Si\text{-}OH + AO\text{-}Si\text{-} \rightarrow \sim Si\text{-}O\text{-}Si\text{-} + AOH$$

wherein A denotes a lower alkyl group.

Addition reaction

$$\sim Si\text{-}CH\text{=}CH_2 + H\text{-}Si\text{-} \rightarrow \sim Si\text{-}CH_2CH_2\text{-}Si\text{-}$$

Ultraviolet or electron beam curing reaction

$$\sim\!\text{Si-CH=CH}_2 + \text{CH}_3\text{-Si-CH}_3 \xrightarrow[\text{initiator}]{h\upsilon} \sim\!\text{Si-CH}_2\text{CH}_2\text{CH}_2\text{-Si-CH}_3$$

$$\sim\!\text{Si-CH=CH}_2 + \text{H-Si-} \xrightarrow{\text{initiator}} \sim\!\text{Si-CH}_2\text{CH}_2\text{-Si-}$$

The silicone resin of the condensation reaction system includes, for example, a resin obtained by condensing polydimethylsiloxane having a terminal - OH group with polydimethylsiloxane having a terminal -H group (hydrogen silane) in the presence of an organotin catalyst (e.g., an organotin acylate catalyst) to form a three-dimensionally crosslinked structure.

The silicone resin of the addition reaction system includes, for example, a resin obtained by reacting polydimethylsiloxane in which a vinyl group is introduced at its terminal with hydrogen silane in the presence of a platinum catalyst to form a three-dimensionally crosslinked structure.

The most basic examples of the silicone resin of the ultraviolet curing system include a resin obtained by the same radical reaction as in the ordinary silicone rubber crosslinking, a resin resulting from photosetting by introducing an acrylic group, a resin obtained by decomposing an onium salt with ultraviolet light to generate a strong acid and cleaving an epoxy group with said strong acid for crosslinking, and a resin resulting from crosslinking by an addition reaction of thiol to vinylsiloxane. The electron beam has stronger energy than the ultraviolet light, causing the crosslinking reaction with radicals without using an initiator as in the ultraviolet curing.

A curable silicone resin has a degree of polymerization of about 50 to 200,000, preferably about 1,000 to 100,000. Examples of the curable silicone resin are as follows.

Resins of Shin-etsu Silicone K.K.: KS-718, -774, -775, -778, -779H, -830, -835, -837, -838, -839, -841, -843, -847, -847H, X-62-2418, -2422, -2125, -2492, -2494, -470, -2366, -630, X-92-140, -128, KS-723A • B, -705F, -708A, -883, -709, -719

Resins of Toshiba Silicone K.K.: TPR-6701, -6702, -6703. -3704, -6705, -6722, -6721, -6700, XSR-7029, YSR-3022, YR-3286

Resins of Dow Corning K.K.: DK-Q3-202, -203, -204, -210, -240, -3003, -205, -3057, SFXF-2560 Resins of Toray Silicone K.K.: SD-7226, 7320, 7229, BY24-900, 171, 312, 374, SRX-375, SYL-OFF23, SRX-244, SEX-290

Resin of I.C.I. Japan: SILCOLEASE 425

Silicone resins described in Japanese Laid-open Patent Application (Kokai) No. 34,447/1972 and Japanese Patent Publication No. 40,918/1977 can also be used.

When the curable silicone resin coating is formed on the surface of the film, a known coating method can be used. Examples of such coating method are the bar coating method, doctor blade coating method, a reverse-roll coating method and gravure coating method.

Drying and curing (e.g. heat curing or ultraviolet curing) can be conducted separately or simultaneously. When they are conducted simultaneously, the temperature is preferably at least 100°C. The conditions for drying and heat curing are preferably at least 100°C and about 30 seconds. When the drying temperature is lower than 100°C and the curing time is less than 30 seconds, curing of the coating is incomplete, and dropping of the coating occurs, thus making durability unstable.

The thickness of the curable silicone resin coating is not limited in particular. However, it is preferably in the range of 0.05 to 0.5 µm. When the coating is too thin, releasability decreases and satisfactory performance cannot be expected. When the coating is too thick, curing takes much time, inviting disadvantage in production.

In this invention, the above release film is formed on the surface of the adhesive layer in the polarizing film, the retarded polarizing film or the retardation film having the adhesive layer on one surface. At this time, the lamination is conducted such that the adhesive layer is brought into contact with the surface of the curable silicone resin coating film of the release film.

It is required that the laminate of this invention is situated such that the orientation main axis, as measured by a microwave transmission-type molecular orientation meter, of the biaxially oriented aromatic polyester film in the release film the orientation axis of the polarizing film, the retarded polarizing film or the retardation film are substantially the same or substantially form an angle of 90°. Here, "substantially the same" means that both the directions exactly agree with each other or may be slightly deviated to such an extent as not to actually prevent visual inspection. Deviation of usually 5° or less, preferably 3° or less is permissible.

Generally, the orientation main axis, as measured by a microwave transmission-type molecular orientation meter (hereinafter simply referred to at times as the "orientation main axis"), of the biaxially oriented aromatic polyester film nearly agrees with the longitudinal (length) direction or a transverse (width) direction of the film. Accordingly, for example, the longitudinal direction of the biaxially oriented aromatic polyester film is caused to agree with the longitudinal direction (the length direction; the direction of the orientation axis) of the polarizing film, the retarded polarizing film or the retardation film to meet the conditions of the lamination.

In the laminate of this invention, the orientation main axis of the release film and the orientation axis of the polarizing film, the retarded polarizing film or the retardation film agree with each other or are deviated by 90°, with the result that the color of the coherent light does not occur in the visual inspection of foreign-matters according to the crossed Nicol's method, and the foreign matters or defects can therefore easily be detected. When the orientation main axis of the release film and the orientation axis of the film accord with each other, the inspection can be conducted in a bright sight. On the other hand, when both axes are deviated by 90°, the inspection is conducted in a dark sight with a reflected light alone. In either case, foreign matters can easily be inspected. For example, even a product having a length of 900 mm and a width of 600 mm can easily be inspected, and foreign matters or defects are scarcely overlooked.

As the polarizing film, the retarded polarizing film and the retardation film, materials which have been so far known per se and so far used can be employed. Of these, as the polarizing film, the retarded polarizing film and the retardation film, a TFT (active matrix) system and an STN (super twist nematic) system of a large size are preferable.

Brief Explanation of Drawings

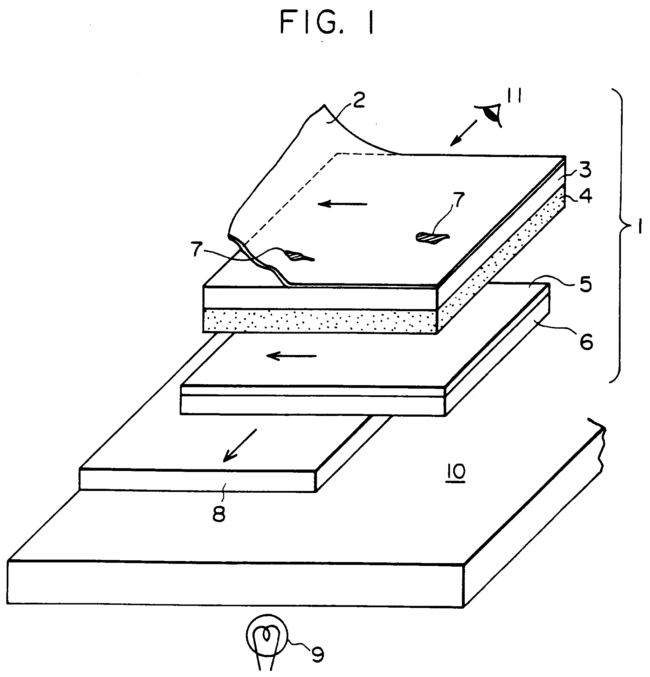

Figure 1 is a schematic view showing the structure of a laminate and a state of visual inspection in this invention. In Figure 1, 1 is a structure of a laminate, 2 is a protective film, e.g., a polyethylene film having a thickness of 50 to 70 μm, 3 is a polarizing film (or a retarded polarizing film or a retardation film) usually having a thickness of 120 to 200 μm, 4 is an adhesive layer usually having a thickness of 20 to 50 μm, 5 is a silicone release layer, 6 is a biaxially oriented aromatic polyester film, 7 is a foreign matter or a defect having a size of 50 to 200 μm which is present in the protective film 2, 8 is a polarizing film for crossed Nicol inspection, 9 is a light source, e.g., two fluorescent lights (20 W), and 10 is an opaque light diffusion film. The laminate 1 consists of the structure from the protective film 2 to the biaxially oriented aromatic polyester film 6, and the release film consists of the silicone release layer 5 and the biaxially oriented aromatic polyester film 6.

The foreign matters or the defects which are inspected through the laminate of this invention are present not only in the protective film, as shown in Figure 1, but also in the polarizing film, the retarded polarizing film, the retardation film, the adhesive layer, the silicone release layer or the biaxially oriented aromatic polyester film, or are present therebetween. At any rate, the foreign matters or the defects in the laminate can easily be found by visual inspection.

This invention will be explained in more detail by referring to the following Examples and Comparative Examples. The properties in said Examples were measured by the following methods.

(19) MOR value, inclination of the orientation main axis of a crystal (orientation angle)

The MOR value and the inclination of the orientation main axis of a crystal (orientation angle) were determined from the pattern of transmitted microwave intensity using a microwave molecular orientation meter manufactured by Kanzaki Paper Manufacturing Co., Ltd.

(2) Condition of visual inspection (influence of light interference under crossed Nicol)

The visual inspection was conducted with the structure shown in Figure 1, and conditions of occurrence of light interference were evaluated with the following grades.

good: Light interference does not occur.
slightly bad: Light interference occurs, but inspection is possible.
bad: Light interference occurs and inspection is impossible.

Examples 1 to 3 and Comparative Examples 1 to 4

Molten polyethylene terephthalate was extruded into a film, and the film was rapidly cooled in contact with a rotary cooling drum at 20°C to form an unstretched film. The unstretched film was consecutively biaxially stretched at stretch ratios shown in Table 1, and then thermoset under conditions shown in Table 1 to give a transparent biaxially oriented polyethylene terephthalate film having a thickness of 38 μm.

Subsequently, a silicone resin coating solution having the following composition was coated on one surface of the biaxially oriented polyethylene terephthalate film in a coating amount (wet) of 8 g/m$^2$. The thus coated film was dried and cured at 130°C for 30 seconds to obtain a release film having a coating thickness of 0.24 μm.

〈Composition of the coating solution〉

|  | parts by weight |
|---|---|
| Curable silicone resin (KS847H) | 100 |
| Curing agent (CAT PL-50T, made by Shin-etsu Silicone K.K.) | 2 |
| Diluent: methyl ethyl ketone/xylene/methyl isobutyl ketone | 898 |

A polyester adhesive tape (NITTOH-31B) was adhered to the release surface of the release film, 5 kg pressure rollers were driven back and forth. After the film was left to stand for 20 hours, a 180° peeling strength of the tape was measured and found to be all within the range of 9 g±2 g/25 mm. Thus, the film had sufficient releasability as a release film for a polarizing film (peeling liner).

Using the release film, a laminate was formed with the structure indicated at 1 in Figure 1, and was measured for various properties. The results are shown in Table 1.

Table 1

| Film-forming Conditons & Film Properties | Unit | Example 1 | | | Example 2 | | | Example 3 | | Comp.EX. |
|---|---|---|---|---|---|---|---|---|---|---|
| | | B | C | F | B | C | F | C | F | B |
| Film formed<br>  Stretch ratio:<br>    longitudinal direction<br>    transverse direction<br>  Crystal thermosetting temp.<br>    zone x 1<br>    zone x 2<br>    zone x 3<br>  Film thickness<br>  Film width | times<br>times<br><br>˚C<br>˚C<br>˚C<br>$\mu$m<br>mm | 3.1<br>4.1<br><br>180<br>200<br>180<br>38<br>730 | | | 2.9<br>4.1<br><br>205<br>215<br>180<br>38<br>730 | | | 3.1<br>4.1<br><br>230<br>230<br>180<br>38<br>730 | | 3.1<br>4.1<br><br>230<br>230<br>180<br>38<br>730 |
| Silicone Coating<br>  Heat shrinkage(longitudinal)<br>    (110˚C x 30 min.)<br>  Heat shrinkage (transeverse)<br>    (110˚C x 30 min.)<br>  Peeling strength | %<br><br>%<br><br>g/25mm | 0.2<br><br>0.2<br><br>9 | 0.2<br><br>0.1<br><br>8 | 0.2<br><br>0.2<br><br>9 | 0.1<br><br>0<br><br>8 | 0.1<br><br>0<br><br>9 | 0.1<br><br>0<br><br>9 | 0.1<br><br>0<br><br>9 | 0.1<br><br>0<br><br>9 | 0.1<br><br>0<br><br>8 |
| MOR value<br>(Maximum MOR value<br>      - Minimum MOR value) | | 1.5<br><br>0.1 | 1.4<br><br>0.1 | 1.5<br><br>0.1 | 1.7<br><br>0.1 | 1.6<br><br>0 | 1.7<br><br>0.1 | 1.7<br><br>0.2 | 1.7<br><br>0.1 | 1.9<br><br>0.3 |
| Retardation (R) value | nm | 1220 | 1250 | 1220 | 1450 | 1630 | 1520 | 1200 | 1300 | 1030 |
| State of visual inspection<br>(Influence of light interfe-<br>rence under crossed Nicols) | | good | good | good | good | good | good | good | good | slightly bad |

Comp.Ex. : Comparative Example

(to be continued)

EP 0 635 358 B1

EP 0 635 358 B1

Table 1 (continued)

| Film-forming Conditons & Film Properties | Unit | Comp. Ex. 2 | | | Comp. Ex. 3 | | | Comp. Ex.4 | |
|---|---|---|---|---|---|---|---|---|---|
| | | B | C | F | B | C | F | C | F |
| Film formed Stretch ratio: | | | | | | | | | |
| longitudinal direction | times | 2.1 | | | 3.6 | | | 3.6 | |
| transverse direction | times | 4.1 | | | 3.7 | | | 3.8 | |
| Crystal thermosetting temp. | | | | | | | | | |
| zone x 1 | ˙C | 180 | | | 180 | | | 234 | |
| zone x 2 | ˙C | 200 | | | 200 | | | 236 | |
| zone x 3 | ˙C | 180 | | | 180 | | | 190 | |
| Film thickness | $\mu$m | 38 | | | 38 | | | 38 | |
| Film width | mm | 730 | | | 730 | | | 730 | |
| Silicone Coating | | | | | | | | | |
| Heat shrinkage(longitudinal) (110˙C x 30 min.) | % | 0.1 | 0.1 | 0.2 | 0.2 | 0.1 | 0.2 | 0.1 | 0.1 |
| Heat shrinkage (transeverse) (110˙C x 30 min.) | % | 0.1 | 0.1 | 0.1 | 0.2 | 0.1 | 0.2 | 0 | 0 |
| Peeling strength | g/25mm | 9 | 9 | 9 | 8 | 9 | 9 | 9 | 8 |
| MOR value (Maximum MOR value | | 2.0 | 1.9 | 2.0 | 1.2 | 1.0 | 1.2 | 1.1 | 1.9 |
| - Minimum MOR value) | | 0.3 | 0.1 | 0.2 | 0.2 | 0.2 | 0.3 | 0.3 | 0.3 |
| Retardation (R) value | nm | 1540 | 1860 | 1670 | 120 | 75 | 130 | 190 | 190 |
| State of visual inspection (Influence of light interfe- rence under crossed Nicols) | | bad | bad | bad | bad | bad | bad | bad | bad |

Comp. Ex.: Comparative Example

```
Notes:

        Regarding the positions of the film formed,
the overall width (2,190 mm) of the film formed was
divided into the following three parts (730 mm wide
each), B, C and F.
                B: Film portion at the left viewed from a
                   take-up position of the film formed
                C: Film position at the center viewed from
                   a take-up position of the film formed
                F: Film position at the right viewed from a
                   take-up position of the film formed
```

The properties are given on the laminate formed by the silicone coating.

In the film used in Comparative Example 1 and the film used in Example 3, the film formed is divided into three parts in the width direction. That is, the film (B) in Comparative Example 1 is a film portion at the left viewed from the take-up position of the film formed. The films (C and F) in Example 3 are film portions at the center and at the right viewed from the take-up position of the film formed. The films are, though cut in the length direction from the same film formed, thus different in the MOR value and the difference between the maximum and minimum values of the MOR value, presumably because the orientation main axis varies depending on the position due to the bowing phenomenon in the film-forming.

## Claims

1. A laminate having improved polarization characteristics, in which an adhesive layer is formed on one surface of the polarizing film, a retarded polarising film or a retardation film and a release film having a transparent biaxially oriented aromatic polyester film as base film has its release surface in contact with the adhesive layer, wherein the positioning of the polyester film with respect to the polarizing film, the retarded polarizing film or the retardation film is such that the orientation main axis (as measured by a microwave transmission-type molecular orientation meter) of the polyester film is essentially parallel or substantially perpendicular to the orientation axis of the polarizing film, the retarded polarizing film or the retardation film, and wherein the biaxially oriented aromatic polyester film has an MOR value (the ratio of the maximum value to the minimum value of transmission, both measured with a molecular orientation meter respectively in the longitudinal and in the transverse directions of stretching) of 1.3 to 1.8, and a retardation (R) value, as defined by the following formula (1), of at least 1,200 nm.

$$R = \Delta n.d \tag{1}$$

wherein $\Delta n$ is the difference $(nx - ny)$ between the refractive index $(nx)$ in the width direction and the refractive index $(ny)$ in a direction at right angles to the width direction of the film in a visible light having a wavelength $(\lambda)$ of 589 nm, and d is the thickness (nm) of the film.

2. The laminate of claim 1 wherein in the biaxially oriented aromatic polyester film the difference between the maximum value and the minimum value of the MOR is 0.2 or less.

3. The laminate of claim 1 or 2 wherein the release film is a film obtained by imparting releasability to at least one surface of a transparent biaxially oriented aromatic polyester film by coating with a silicone.

4. The laminate of any of claims 1 to 3 wherein the aromatic polyester film is a polyethylene terephthalate film.

5. A release film for inspection of a polarizing film, a retarded polarizing film or a retardation film, which release film is obtainable by imparting releasability to at least one surface of a transparent biaxially oriented aromatic polyester film by coating with a silicone, said biaxially oriented aromatic polyester film having an MOR value, as defined in claim 1, of 1.3 to 1.8.

6. The release film of claim 5 wherein in the biaxially oriented aromatic polyester film, the difference between the maximum value and the minimum value of the MOR is 0.2 or less.

7. The release film of claim 5 or 6 wherein the biaxially oriented aromatic polyester film has a retardation (R) value, as defined by the following formula (1), of at least 1,200 nm.

$$R = \Delta n.d \tag{1}$$

wherein $\Delta n$ is the difference (nx - ny) between the refractive index (nx) in the width direction and the refractive index (ny) in a direction at right angles to the width direction of the film in a visible light having a wavelength ($\lambda$) of 589 nm, and d is the thickness (nm) of the film.

8. The release film of any of claims 5 to 7 wherein the aromatic polyester film is a polyethylene terephthalate film.

**Patentansprüche**

1. Laminat mit verbesserten Polarisationseigenschaften, in welchem eine Klebschicht auf einer Oberfläche des Polarisationsfilms, eines verzögerten Polarisationsfilms oder eines Verzögerungsfilms gebildet ist und ein Trennmittelfilm mit einem durchsichtigen biaxial orientierten aromatischen Polyesterfilm als ein Basisfilm mit seiner Trennmitteloberfläche mit der Klebschicht in Kontakt steht, wobei die Positionierung des Polyesterfilms in Bezug auf den Polarisationsfilm, den verzögerten Polarisationsfilm oder den Verzögerungsfilm derart ist, daß die Orientierungshauptachse (wie durch ein Molekülorientierungsmeßgerät vom Mikrowellentransmissions-Typ gemessen) des Polyesterfilms im wesentlichen parallel oder im wesentlichen senkrecht zu der Orientierungsachse des Polarisationsfilms, des verzögerten Polarisationsfilms oder des Verzögerungsfilms ist, und wobei der biaxial orientierte aromatische Polyesterfilm einen MOR-Wert (das Verhältnis des Maximalwertes zu dem Minimalwert der Transmission, beide mit einem Molekülorientierungsmeßgerät jeweils in der Längs- und der Querrichtung des Streckens gemessen) von 1,3 bis 1,8 und einen Verzögerungswert (R), wie durch die folgende Formel (1) definiert, von mindestens 1.200 nm aufweist:

$$R = \Delta n \cdot d \tag{1}$$

wobei $\Delta n$ die Differenz (nx - ny) zwischen dem Brechungsindex (nx) in der Breitenrichtung und dem Brechungsindex (ny) in einer Richtung in rechten Winkeln zu der Breitenrichtung des Films bei einem sichtbaren Licht mit einer Wellenlänge ($\lambda$) von 589 nm und d die Dicke (nm) des Films sind.

2. Laminat nach Anspruch 1, wobei die Differenz zwischen dem Maximalwert und dem Minimalwert des MOR bei dem biaxial orientierten aromatischen Polyesterfilm 0,2 oder weniger beträgt.

3. Laminat nach Anspruch 1 oder 2, wobei der Trennmittelfilm ein Film ist, welcher dadurch erhalten wurde, daß mindestens einer Oberfläche eines durchsichtigen biaxial orientierten aromatischen Polyesterfilms mittels Beschichten mit einem Silikon Trennbarkeit verliehen wurde.

4. Laminat nach einem der Ansprüche 1 bis 3, wobei der aromatische Polyesterfilm ein Polyethylenterephthalatfilm ist.

5. Trennmittelfilm zur Prüfung eines Polarisationsfilms, eines verzögerten Polarisationsfilms oder eines Verzögerungsfilms, wobei der Trennmittelfilm dadurch erhältlich ist, daß mindestens einer Oberfläche eines durchsichtigen biaxial orientierten aromatischen Polyesterfilms mittels Beschichten mit einem Silikon Trennbarkeit verliehen wird, wobei der biaxial orientierte aromatische Polyesterfilm einen MOR-Wert, wie in Anspruch 1 definiert, von 1,3 bis 1,8 aufweist.

6. Trennmittelfilm nach Anspruch 5, wobei die Differenz zwischen dem Maximalwert und dem Minimalwert des MOR bei dem biaxial orientierten aromatischen Polyesterfilm 0,2 oder weniger beträgt.

**7.** Trennmittelfilm nach Anspruch 5 oder 6, wobei der biaxial orientierte aromatische Polyesterfilm einen Verzögerungswert (R), wie durch die folgende Formel (1) definiert, von mindestens 1.200 nm aufweist:

$$R = \Delta n \cdot d \qquad (1)$$

wobei $\Delta n$ die Differenz (nx - ny) zwischen dem Brechungsindex (nx) in der Breitenrichtung und dem Brechungsindex (ny) in einer Richtung in rechten Winkeln zu der Breitenrichtung des Films bei einem sichtbaren Licht mit einer Wellenlänge ($\lambda$) von 589 nm und d die Dicke (nm) des Films sind.

**8.** Trennmittelfilm nach einem der Ansprüche 5 bis 7, wobei der aromatische Polyesterfilm ein Polyethylenterephthalatfilm ist.

**Revendications**

**1.** Stratifié ayant des caractéristiques de polarisation améliorées, dans lequel une couche adhésive est formée sur une surface du film de polarisation, un film de polarisation retardée ou un film retardateur et un film détachable ayant un film polyester aromatique transparent orienté bi-axialement comme film de base a sa surface de séparation en contact avec la couche adhésive, dans lequel le positionnement du film polyester par rapport au film de polarisation, au film de polarisation retardée ou au film retardateur est tel que l'axe principal d'orientation (tel que mesuré par un instrument de mesure d'orientation moléculaire du type à transmission hyperfréquence) du film polyester est essentiellement parallèle ou substantiellement perpendiculaire à l'axe d'orientation du film de polarisation, du film de polarisation retardée ou du film retardateur, et dans lequel le film polyester aromatique orienté bi-axialement a une valeur MOR (rapport entre la valeur maximale et la valeur minimale de transmission, toutes deux mesurées avec un instrument de mesure d'orientation moléculaire dans les directions d'étirement respectivement longitudinale et transversale) de 1,3 à 1,8, et une valeur de retard (R), comme défini par la formule suivante (1), d'au moins 1200 nm.

$$R = \Delta n.d \qquad (1)$$

où $\Delta n$ est la différence (nx - ny) entre l'indice de réfraction (nx) dans le sens de la largeur et l'indice de réfraction (ny) dans une direction perpendiculaire au sens de la largeur du film dans une lumière visible ayant une longueur d'onde ($\lambda$) de 589 nm, et d est l'épaisseur (nm) du film.

**2.** Stratifié selon la revendication 1, dans lequel, dans le film polyester aromatique orienté bi-axialement, la différence entre la valeur maximale et la valeur minimale du MOR est de 0,2 ou moins.

**3.** Stratifié selon la revendication 1 ou 2, dans lequel le film détachable est un film obtenu en communiquant l'état de séparation à au moins une surface d'un film polyester aromatique transparent orienté bi-axialement par revêtement avec un silicone.

**4.** Stratifié selon l'une quelconque des revendications 1 à 3, dans lequel le film polyester aromatique est un film de polyéthylène-téréphtalate.

**5.** Film détachable pour le contrôle d'un film de polarisation, d'un film de polarisation retardée ou d'un film retardateur, lequel film détachable peut être obtenu en communiquant un état de séparation à au moins une surface d'un film polyester aromatique transparent orienté bi-axialement par application d'un silicone, ledit film polyester aromatique transparent orienté bi-axialement ayant une valeur MOR, comme défini dans la revendication 1, de 1,3 à 1,8.

**6.** Film détachable selon la revendication 5, dans lequel, dans le film polyester aromatique orienté bi-axialement, la différence entre la valeur maximale et la valeur minimale du MOR est de 0,2 ou moins.

**7.** Film détachable selon la revendication 5 ou 6 dans lequel le film polyester aromatique orienté bi-axialement a une valeur de retard (R), comme défini par la formule suivante (1), d'au moins 1200 nm.

$$R = \Delta n.d \qquad (1)$$

où $\Delta n$ est la différence (nx - ny) entre l'indice de réfraction (nx) dans le sens de la largeur et l'indice de réfraction (ny) dans une direction perpendiculaire au sens de la largeur du film dans une lumière visible ayant une

longueur d'onde ($\lambda$) de 589 nm, et d est l'épaisseur (nm) du film.

8. Film détachable selon l'une quelconque des revendications 5 à 7 dans lequel le film polyester aromatique est un film de polyéthylène-téréphtalate.

# FIG. 1